# EUROPEAN PATENT APPLICATION

(11) **EP 1 607 829 A2**
(43) Date of publication of application: **21.12.2005**
(21) Application number: 05291285.4
(22) Date of filing: 15.06.2005
(51) Int. Cl.: G06F 1/16

(54) **Battery-charging assembly for image display device and cradle with the same**

(30) Priority: 18.06.2004 KR 2004045372
(71) Applicant: LG Electronics, Inc., Seoul (KR)
(72) Inventor: Kwon, Oh Kwan, Goomi-si Kyungsangbook-do (KR)
(74) Representative: Bentz, Jean-Paul

(57) **Abstract**

A cradle for use with an image display device is provided which allows the image display device to be used while charging. The cradle includes a base member, a supporting member coupled to the base member, and a battery-charging unit provided with the base member to charge a battery of the image display device. The cradle may also include a pivoting cover that acts to cover the charging terminals when no display device is mounted on the cradle. The cover would pivot out of the way to expose the charging terminals when a display device is mounted on the cradle. The cradle may also include a wireless transmitter configured to transmit an image signal to the display device over a wireless link.

## Description

### BACKGROUND OF THE INVENTION

### Field of the Invention

The invention relates to an image display device, and, more particularly to a battery-charging assembly which can recharge a battery of a wireless image display device, and which can also send an image signal to the display device over a wireless link.

### Description of the Related Art

Wireless image display devices such as, for example, wireless monitors, may be used in a household capacity as well as in an industrial capacity due to their portability. This type of wireless image display device typically has a built-in rechargeable battery. However, in most cases, the battery-charging assembly is used only for charging the battery, and not for other purposes.

### SUMMARY OF THE INVENTION

An object to the invention is to solve at least the above problems and/or disadvantages and to provide at least the advantages described hereinafter.

To achieve these and other advantages, and in accordance with the purpose of the invention as embodied and broadly described herein, there is provided a cradle and battery charging assembly for an image display device, including a base member, a supporting member coupled to the base member, and a battery charging unit to charge a battery of an image display device mounted thereon. A position of the supporting member may be adjusted so as to adjust a viewing angle of the image display device and allow for use of the image display device while charging.

A supporting member embodying the invention would typically include a plurality of terminals that are intended to connect with the wireless display device to provide power for charging the battery. In a supporting member embodying the invention, a cover would cover the terminals when no display device is mounted on the supporting member. When a display device is mounted on the supporting member, the terminal cover would be retracted so that the terminals could make contact with corresponding terminals on the wireless display device.

A device embodying the invention, which is used to support and charge the battery of a wireless display device, may also include a wireless transmitter which is configured to send the display device a display signal over a wireless link

Additional advantages, objects, and features of the invention will be set forth in part in the description which follows and in part will become apparent to those having ordinary skill in the art upon examination of the following or may be learned from practice of the invention. The objectives and advantages of the invention may be realized and attained as particularly pointed out in the appended claims.

It is to be understood that both the foregoing general description and the following detailed description of the present invention are exemplary and explanatory and are intended to provide further explanation of the invention as claimed.

### BRIEF DESCRIPTION OF THE DRAWINGS

The invention will be described in detail with reference to the following drawings in which like reference numerals refer to like elements, and wherein:

FIG. 1 is a side view of an assembly of a cradle and an image display device in accordance with an embodiment of the invention;

FIG. 2 is a side view of a cradle for an image display device in accordance with an embodiment of the invention;

FIG. 3 is a rear perspective view of a cradle for an image display device in accordance with an embodiment of the invention;

FIGs. 4 and 5 are exploded views illustrating a battery-charging unit for an image display device in accordance with an embodiment of the invention; and

FIGs. 6 and 7 are exploded views of a charging terminal unit for an image display device in accordance with an embodiment of the invention.

### DETAILED DESCRIPTION OF PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

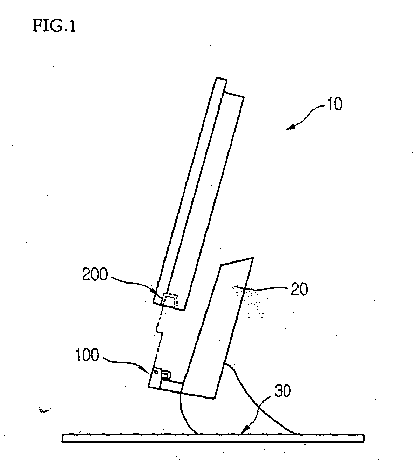

Referring to FIGs. 1 to 3, a cradle for an image display device 10 may include a base member 30, a supporting member 20 coupled to the base member 30 to support a rear surface of the image display device 10, and a battery charging unit 100 provided on the base member 30 to charge a battery of the image display device 10. The image display device 10 may be supported by the battery-charging unit 100 as well as by the supporting member 20. A charging terminal unit 200 on the display device may be electrically connected to the charging unit 100 so as to supply electric power from the battery charging unit 100 to the image display device 10 via the charging terminal unit 200 when the battery charging unit 100 is connected to an outer electric source and the charging terminal unit 200 of the image display device 10 is connected thereto.

The supporting member 20 is designed to support the image display device 10 at a plurality of positions. In one embodiment of the invention, the supporting member 20 supports the image device 10 at a 60-90° angle with respect to a horizontal plane so that the user can use the image display device 10 while also charging the battery of the image display device 10.

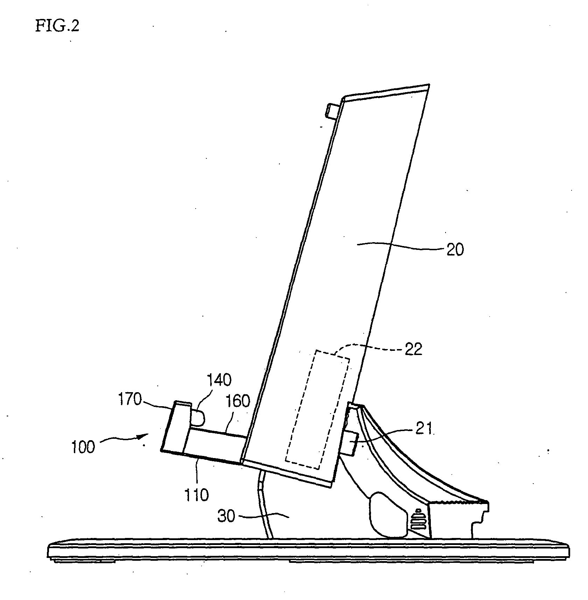

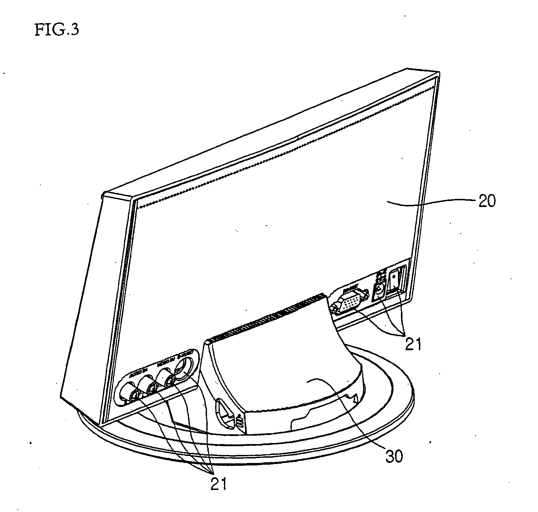

As shown in FIGs. 2 and 3, the supporting member 20 may include a plurality of signal terminals 21 at a rear surface thereof. These signal terminals 21 may include terminals such as, for example, AUDIO IN, VIDEO IN AND S-VIDEO for receiving outer electric power and data. The supporting member 20 may also include a wireless data transmitting unit 22 which is configured to exchange data with the image display device 10 via a wireless link. Such a wireless data transmitting unit 22 may be formed by mounting a variety of electric components on a circuit board to transmit the data to the image display device 10 using an RF transmission technique, an infrared transmission technique, or some other wireless transmission technique.

As described above, a cradle for an image display device in accordance with the invention is designed to charge the battery of the image display device 10, and also to support the image display device 10 so as to facilitate its use in a variety of applications. Furthermore, the wireless data transmitting unit 22 provides for wireless data transmission to the image display device 10.

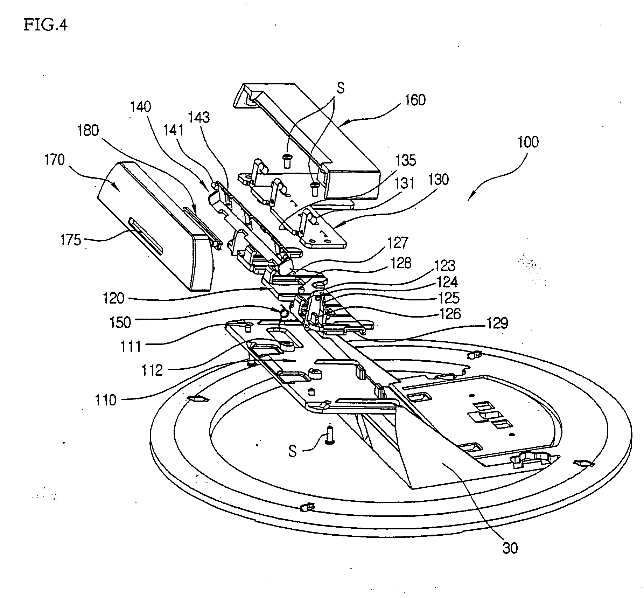

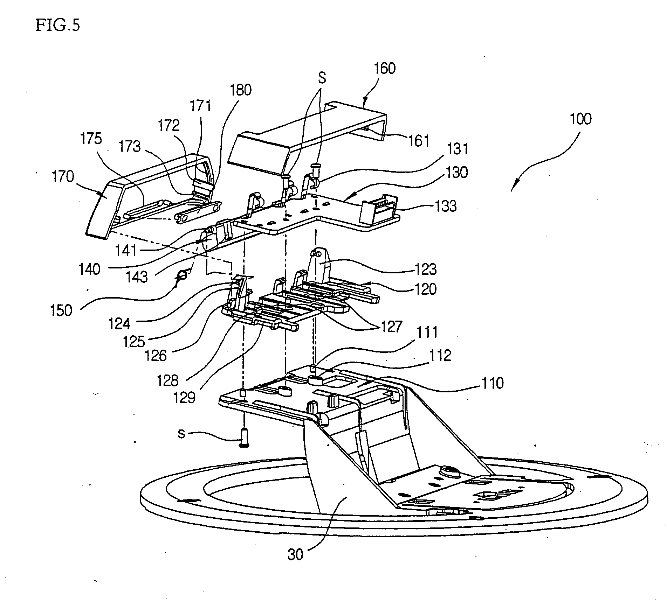

FIGS. 4 and 5 illustrate an exemplary battery-charging unit 100 for a cradle for an image display device in accordance with an embodiment of the invention. The battery-charging unit 100 includes a base 110, a fixing bracket 120, a circuit board 130, a terminal protective cover 140, an upper cover 160, and a front cover 170. The base 110 extends from a top of the base member 30 so as to support various components of the battery-charging unit 100. The base 110 may include seating projections 111 and fixing bosses 112 to position and fix the fixing bracket 120 and the circuit board 130 in place.

The fixing bracket 120 may include a plurality of penetration holes 127 which correspond to the seating projections 111 and the fixing bosses 128 on the base 110 to facilitate alignment and attachment, and a hook guide 129 which couples the fixing bracket 120 to the upper cover 160. Protecting cover supports 123 may be provided at both sides of the fixing bracket 120, extending upward from the fixing bracket 120 by a predetermined height, with hinge holes 124 formed therein to engage a pivot shaft 141 of the terminal protecting cover 140. This will allow the terminal protecting cover 140 to rotate about the hinge shaft 141. The protecting cover supports 123 may also include coupling projections 125 and removal preventing projections 126 for preventing the front cover 170 from being removed in either a frontward or an upward direction.

The fixing bracket 120 positioned as shown in FIGs 4-5 prevents the circuit board 130 from being electrically connected to the base 110, and prevents terminals 131 formed on the circuit board 130 from being electrically connected to each other. Each of the terminals 131 formed on the circuit board 130 may be formed with a predetermined elasticity. By directly forming the terminals 131 on the circuit board 130, working efficiency can be improved.

A display 135 may be provided on a portion of the circuit board 130 to display a current operation state. The display 135 may be any type of device, such as, for example, a light emitting diode, which could readily convey such information. The circuit board 130 may also include a main board connection terminal 133 for receiving electric power. After mounting the fixing bracket 120 and the circuit board 130 on the base 110, they may be secured in position by fixing screws S inserted from either the top or bottom of the circuit board 130.

The terminal protecting cover 140 includes pivot shafts 141 at each end, and terminal projecting portions 143 which correspond to respective positions of the terminals 131. The pivot shafts 141 may be coupled to respective hinge holes 120 of the fixing bracket 124 to allow the terminal protecting cover 140 to be pivoted by application of an external force. The terminal projecting portions 143 allow the terminals 131 to project through the cover and outward when the terminal protecting cover 140 pivots. Thus, in turn, exposes the terminals so that they can contact corresponding terminals on a display device this is mounted on the charging cradle.

A spring 150 may be provided for each pivot shaft 141 to provide an elastic force which returns the pivoted terminal protecting cover 140 from an open position to its initial, closed position. That is, when the image display device 10 is mounted on the battery charging unit 100, the terminal protecting cover 140 is in an open position and the terminals 131 are exposed so as to supply electric power to the image display device 10. When the image display device 10 is separated from the battery-charging unit 100, the terminal protecting cover 140 is returned to its initial closed position due to the elastic force of the springs 150, and the terminals 131 are retracted into the terminal protecting cover 140. Because the terminal protecting cover 140 is disposed between the front cover 170 and the supporting member 20, the terminals 131 are exposed between the front cover 170 and the supporting member 20 when the terminal protecting cover 140 is pivoted to the open position.

The front cover 170 may include coupling grooves 171 which correspond to the coupling projections 125 formed on the protecting cover supports 123 of the fixing bracket 120 to preclude removal of the front cover 170 frontward from the fixing bracket 120. The front cover 170 may also include removal preventing steps 172 and 173 which correspond to the removal preventing projections 126 formed on the protecting cover support 123 of the fixing bracket 120 to preclude removal of the front cover 170 upward from the fixing bracket 120. The front cover 170 may include a display hole 175 and display window 180, through which an output from the display 135 may be transmitted.

The upper cover 160 protects the circuit board 130 , and may include a hook portion 161 which corresponds to the hook guide 129 formed on the fixing bracket 120 to secure the upper cover 160 to the fixing bracket 120. The position of the upper cover 160 may be further secured by fixing screws S inserted from the bottom of the base 110. The upper cover 160 also serves to support the image display device 10.

As described above, by providing the base member 30, the battery-charging unit 100 formed on the base member 30, and the supporting member 20 supporting the image display device 10 on the cradle, a user may recharge the battery of the image display device 10 while also using the image display device 10 and identifying a charging state.

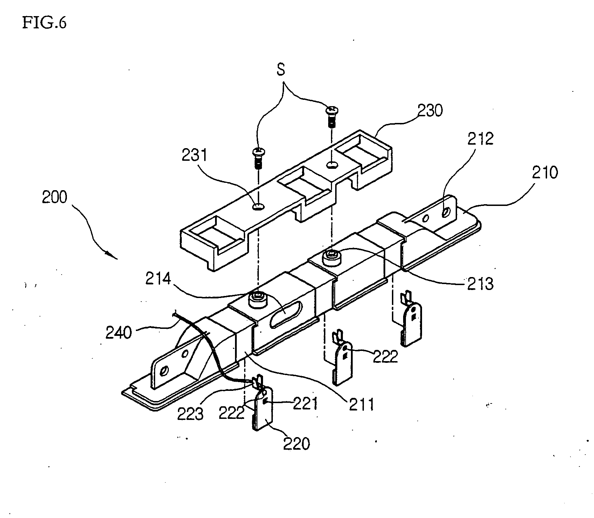

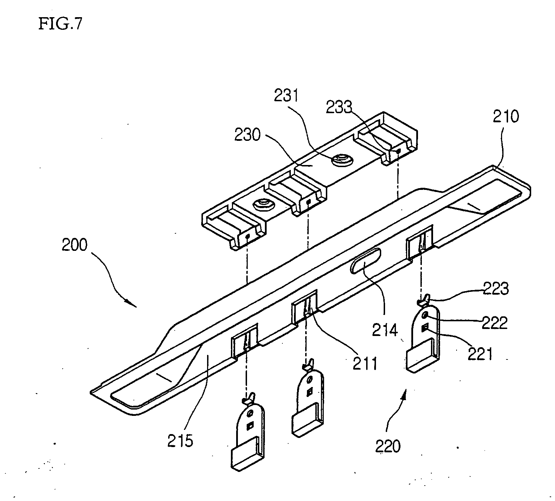

FIGs. 6 and 7 illustrate an exemplary charging terminal unit 200 formed on a bottom of an image display device 10 in accordance with an embodiment of the invention.

The charging terminal unit 200 may include a contact point bracket 210, contact point terminals 220, and a terminal bracket 230. [057] The contact point bracket 210 is coupled to the image display device 10, for example, at a bottom portion of the image display device 10. Other locations may be appropriate. A bottom of the contact point bracket 210 is indented upward to define a space 215 in which the front cover 170 and the charging terminals 131 of the battery-charging unit 100 are inserted. The contact point bracket 210 may include bracket fixing portions 212 which may be fixed to the image display device 10, and contact point coupling portions 211 to which respective contact point terminals 220 may be coupled.

The contact point terminals 220 are electrically connected to the terminals 131 of the battery-charging unit 30 to charge the battery of the image display device 10. That is, a portion of each contact point terminal 220 which is located in the space 215 of the contact point bracket 210 may be in electrical contact with a corresponding terminal 131. The contact point terminals 220 may be connected to a circuit board (not shown) disposed in the image display device 10 by cables 240. Each of the contact point terminals 220 may include a welding hole 222 to which the cable 240 is welded, and a cramping portion 223 to enhance the welding state of the cable 240.

Each of the contact point terminals 220 may also include a projection receiving hole 221 to which the terminal bracket 230 is coupled. That is, the terminal bracket 230 may include terminal coupling projections 233 which correspond to the projection receiving holes 221 of the contact point terminal 220 to couple the contact point bracket 210 and the terminal bracket 230. Terminal coupling projections 233 formed on the terminal bracket 230 may be engaged with the projection receiving holes 221 formed on the contact point bracket 210 and fixing screws S may be inserted through screw holes 231 to secure the terminal bracket 230 to the contact point bracket 210. Thus, the terminal bracket 230 allows the cables 240 to be more securely fixed to the contact point terminals 220.

The contact point bracket 210 may also include a drain hole 214 through which water introduced from an external side can be quickly drained, thereby preventing damage to the circuit.

The charging terminal unit 200 for an image display device 10 in accordance with the invention as embodied and broadly described herein is designed to charge a battery of an image display device 10 as the terminals 131 are inserted in the space 215 formed in the underside of the contact point bracket 210 and the terminals 131 contact respective contact point terminals 220. An image display device with the above-described charging terminal unit 200 may be associated with the above-described inventive cradle. More particularly, the inventive cradle is designed to conveniently and safely perform a charging operation on the image display device.

An object of the invention is to provide a cradle with a battery-charging assembly for an image display device which makes it easier to charge a battery of an image display device.

Another object of the invention is to provide a cradle with a battery-charging assembly for an image display device which can be safely and conveniently used in charging a battery of the image display device.

Another object of the invention is to provide a battery-charging assembly for an image display device which can be used for charging a battery of an image display device as well as for supporting the image display device.

Another object of the invention is to provide a cradle for an image display device which can be used for charging a battery of the image display device, which can be used to support the image display device, and which can transmit data to the image display device.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A cradle for an image display device, comprising:
a supporting member configured to support the image display device;
a battery charging unit formed on the supporting member and configured to charge a battery of the image display device when the image display device is mounted on the supporting member; and
a wireless transmitter mounted on the supporting member and configured to transmit a display signal to the image display device.

2. The cradle of claim 1, wherein the wireless transmitter is an infrared transmitter.

3. The cradle of claim 1, wherein the wireless transmitter is a RF transmitter.

4. The cradle of claim 1, wherein the supporting member includes a plurality of input signal terminals configured to receive a display signal from an exterior source.

5. The cradle of claim 4, wherein the wireless transmitter is configured to transmit a display signal received through the input signal terminals to the image display device.

6. The cradle of claim 1, further comprising a display mounted on the supporting member and configured to display an operational state of the battery charging unit.

7. A cradle for an image display device, comprising:
a supporting member configured to support the image display device;
a battery charging unit formed on the supporting member and configured to charge a battery of the image display device when the image display device is mounted on the supporting member, wherein the battery-charging unit comprises a plurality of terminals that are configured to contact charging terminals of an image display device mounted on the supporting member; and
a terminal protecting cover that is movably coupled to the supporting member and that is configured to protect the terminals when no image display device is mounted on the supporting member.

8. The cradle of claim 7, wherein the terminal protecting cover is configured to move between a first position wherein the terminal protecting cover covers the terminals, and a second position wherein the terminals are exposed.

9. The cradle according to claim 8, wherein the terminal protecting cover is provided with terminal projecting portions which allow the terminals to project through the terminal protecting cover when the terminal protecting cover is in the second position.

10. The cradle according to claim 8, further comprising an elastic member which biases the terminal protecting cover into the first position.

11. The cradle of claim 7, further comprising a display mounted on the supporting member and configured to display an operational state of the battery charging unit.

12. A wireless image display device, comprising:
a display screen;
a battery configured to power the display device;
a contact point bracket mounted on the image display device; and
a plurality of contact point terminals mounted on the contact point bracket, wherein the contact point terminals are coupled to the battery and configured to contact terminals of a charging device.

13. The wireless image display device of claim 12, wherein the contact point bracket is indented upward to define a receiving space, and wherein the contact point terminals are mounted on an interior face of the receiving space.

14. The wireless image display device of claim 13, further comprising a terminal bracket coupled to the contact point bracket to enharice a coupling of the contact point terminals to the contact point bracket.

15. The wireless image display device of claim 14, wherein coupling projections are formed on the terminal bracket, wherein the contact point terminals include coupling depressions, and wherein the coupling projections are received in the coupling depressions.

16. A display system, comprising:
an image display device comprising a wireless receiver configured to receive a display signal;
a supporting member configured to support the image display device; and
a wireless transmitter mounted on the supporting member and configured to transmit a display signal to the wireless receiver of the image display device.

17. The display system of claim 16, wherein the wireless transmitter is an infrared transmitter.

18. The display system of claim 16, wherein the wireless transmitter is a RF transmitter.

19. The display system of claim 16, further comprising a battery charging unit formed on the supporting member and configured to charge a battery of the image display device when the image display device is mounted on the supporting member.

20. The display system of claim 16, wherein the battery charging unit comprises:
a plurality of charging terminals mounted on the supporting member; and
a terminal protecting cover that is movably coupled to the supporting member and that is configured to protect the charging terminals when no image display device is mounted on the supporting member.

21. The display system of claim 20, wherein the terminal protecting cover is configured to move between a first position wherein the terminal protecting cover covers the terminals, and a second position wherein the terminals are exposed.

22. The display system of claim 21, wherein the terminal protecting cover is provided with terminal projecting portions which allow the terminals to project through the terminal protecting cover when the terminal protecting cover is in the second position.
